# EUROPÄISCHE PATENTSCHRIFT

(11) **EP 1 429 491 B1**
(45) Veröffentlichungstag und Bekanntmachung des Hinweises auf die Patenterteilung: **01.09.2010**
(21) Anmeldenummer: 03026282.8
(22) Anmeldetag: 14.11.2003
(51) Int. Cl.: H04L 12/26

(54) **Verfahren zur Überwachung einer Anwendung in einem paketvermittelten Netzwerk**
Method for monitoring an application in a packet switched network
Méthode pour surveiller une application dans un réseau de commutation par paquets

(30) Priorität: 09.12.2002 DE 10257454
(43) Veröffentlichungstag der Anmeldung: 16.06.2004
(73) Patentinhaber: SIEMENS AKTIENGESELLSCHAFT, 80333 München (DE)
(72) Erfinder: Hanna, Thomas, 32758 Detmold (DE); Laux, Thorsten, 59558 Lippstadt (DE)

(56) Entgegenhaltungen:
- EP-A2- 1 227 635
- WO-A1-00/69140
- US-B1- 6 260 148
- DAY LOTUS J ROSENBERG DYNAMICSOFT H SUGANO FUJITSU M: "A Model for Presence and Instant Messaging" IETF STANDARD, INTERNET ENGINEERING TASK FORCE, IETF, CH, Februar 2000 (2000-02), XP015008561 ISSN: 0000-0003
- CAMPBELL J ROSENBERG DYNAMICSOFT B: "CPIM Mapping of SIMPLE Presence and Instant Messaging draft-ietf-simple-cpim-mapping-01" IETF STANDARD-WORKING-DRAFT, INTERNET ENGINEERING TASK FORCE, IETF, CH, Bd. simple, Nr. 1, 26. Juni 2002 (2002-06-26), XP015003366 ISSN: 0000-0004

## Beschreibung

Die Erfindung betrifft ein Verfahren gemäß dem Oberbegriff des Patentanspruchs 1.

Zur Übertragung von Daten und für Kommunikationszwecke werden Netzwerke eingesetzt, in denen die Netzelemente paketvermittelt miteinander kommunizieren. Solche Netzwerke können entweder lokal begrenzt sein, dann spricht man von LANs (LAN = Local Area Network), sie können aber auch weltweit verteilt sein (WAN = Wide Area Network), wie zum Beispiel das Internet. Neben den Verbindungswegen (Datenleitung) bestehen solche Netzwerke aus einer Vielzahl unterschiedlicher Netzelemente, wie z. B. Switche, Router und Rechner (Server, Workstations), letztere mit darauf installierten Anwendungen.

Für die Kommunikation zwischen den Netzelementen spielt es in der Regel keine Rolle, wo diese Netzelemente physikalisch bzw. geographisch angeordnet sind.

Die Daten werden jeweils zum Transport zu Datenpaketen zusammengefasst und mit einer eindeutigen Netzwerkadresse der empfangenden Netzelemente adressiert. Da der Weitertransport der Daten im Netzwerk automatisiert erfolgt, ist es für den Benutzer unerheblich, an welchem Ort sich die adressierte Netzwerkkomponente, beispielsweise ein Server mit einer Anwendung, tatsächlich befindet. Das ist jedoch anders, wenn auf Netzelemente zum Zwecke der Überwachung oder für Wartungszwecke zugegriffen werden muss. Dafür sind oftmals Bedienvorgänge nötig, die direkt am betroffenen Netzelement durchgeführt werden müssen.

In paketvermittelten Netzwerken ist es wichtig, rechtzeitig zu erkennen, ob eine Anwendung oder ein Netzelement korrekt arbeitet, einen Fehler aufweist oder sogar vorzeitig gestoppt ("terminiert") ist. Dies sollte auch von einem zentralen, entfernten Standort (Arbeitsplatz) aus überwachbar sein. Um die Netzelemente weitverzeigter Netzwerke von einem zentralen Standort aus überwachen und steuern zu können, besitzen diese Netzelemente häufig Schnittstellen zum Fernzugriff. Diese Schnittstellen arbeiten meist mit einem genormten Protokoll, damit verschiedene Netzelemente und Anwendungen von einer zentralen Stelle aus mit einem einzigen Anwendungsprogramm, man sagt auch Administrationstool, verwaltet werden können. Ein solches genormtes Protokoll ist beispielsweise das SNMP (Simple Network Management Protocol), welches die gleichzeitige Überwachung und Steuerung verschiedenster Netzelemente und Anwendungen innerhalb eines Administrationstools gestattet. Das Administrationstool ist z.B. eine auf einem PC installierte Zielanwendung, die auch als NMS (Network Management Station) bezeichnet wird.

Die einzelnen Anwendungen (Prozesse) und Netzelemente werden zum Fernzugriff von lokalen Überwachungs-Instanzen, sog. Management-Clients, überwacht ("Monitoring") und gesteuert ("Controlling"). Jeder Management-Client eines Netzelements oder einer Anwendung ist mit einer Instanz verbunden, die die Zustandsmeldungen des Management-Clients zusammenfasst und in eine protokollgemäße Meldung umsetzt. Diese Instanz wird oft auch als SNMP Agent bezeichnet, die Meldungen in der Literatur häufig als "SNMP-Traps" oder kurz "Traps". Der SNMP Agent sendet die Traps zu einer oder mehreren Network Management Station(s), wo die überwachten Netzelemente und Anwendungen und deren aktuelle Zustände (z. B. Online, Offline oder die momentane Auslastung) dargestellt (angezeigt) und von wo aus Steuerkommandos zu den Netzelementen und Anwendungen zurückübermittelt werden können.

Die Steuerkommandos und die Zustandsinformationen, also die Traps, werden dabei als UDP-Meldungen (UDP = User Datagram Protocol) übermittelt.

In den modernen Datennetzen, insbesondere in größeren Firmennetzwerken und dem Internet, werden häufig Kommunikationsverfahren eingesetzt, die als Presence/Instant-Messaging-Verfahren bekannt sind. Beispiele dafür sind die Anwendungen "Windows Messenger", "AOL Messenger" oder "ICQ". Dabei sind auf den Arbeitsplatzrechnern der Benutzer spezielle Anwendungen installiert, häufig auch als Messaging-Applikationen bekannt, in denen eine Liste mit bevorzugten Kommunikationspartnern des Netzwerks geführt wird. Solche Listen werden auch als "Buddy-List" bezeichnet, weil dieses Kommunikationsverfahren bevorzugt zum einfachen Austausch von Textnachrichten mit Freunden und Bekannten (sogenanntes "Chatten") verwendet wird. In der "Buddy-List" markieren Symbole, beispielsweise in Form eines roten oder eines grünen Punktes, den aktuellen Status des möglichen Kommunikationspartners, also beispielsweise, ob der betreffende Benutzer momentan erreichbar ("Online"), beschäftigt ("Busy") oder nicht am Netzwerk angemeldet ("Offline") ist.

Bei Presence/Instant-Messaging-Anwendungen wird zwischen solchen mit zentralem und solchen ohne zentralen Server unterschieden. Während bei den Anordnungen ohne zentralen Server die Meldungen über den aktuellen Zustand der einzelnen Benutzer bzw. die Meldungen über die Zustandsänderungen, beispielsweise von "Offline" zu "Online", direkt zwischen allen betroffenen Arbeitsplatzrechnern ausgetauscht werden müssen, wird bei den Anordnungen mit zentralen Servern in diesen eine Liste aller im Kommunikationsnetzwerk erreichbaren Kommunikationspartner geführt. Die Zustandsinformationen der einzelnen Benutzer bzw. die Meldungen über die Zustandsänderungen werden von den einzelnen Arbeitsplätzen lediglich zu diesen zentralen Servern übertragen und dann in dessen Liste vermerkt. In dieser Liste ist neben jedem Kommunikationspartner vermerkt, auf welchen Arbeitsplatzrechnern des Netzwerks dieser in der "Buddy-List" geführt wird. Zustandsmeldungen bzw. Meldungen über Zustandsänderungen werden dann von diesem Server zu genau jenen Arbeitsplatzrechnern verschickt, deren Benutzer diesen Kommunikationspartner führt. Sobald einer der Kommunikationspartner in der "Buddy-List" als "Online" gekennzeichnet ist, können mit ihm z.B. einfach Textnachrichten ausgetauscht werden. Dieser Vorgang wird gemeinhin als "Chatten" bezeichnet.

Presence/Instant-Messaging-Anwendungen sind in verschiedenen Netzwerken mit unterschiedlichen Protokollen bekannt. Das Session Initiating Protocol (SIP) wird vorwiegend zur Einleitung von Multimedia-Sitzungen in Datennetzen genutzt, z.B. für die Sprachübertragung ("Voice-over-IP" = Sprachübertragung mit Hilfe des Internet-Protokolls) ; hier ist mit der SIMPLE-Erweiterung (SIMPLE = SIP for Instant Messaging and Presence Leveraging Extensions) eine für die Zwecke des Presence/Instant-Messaging nutzbare Protokollerweiterung definiert.

Ein bekanntes Verfahren zur Überwachung und insbesondere auch zur Steuerung von computergestützten Anwendungen von einem entfernten Standort aus, ist die Verwendung von sogenannten PC-Fernsteuerungsprogrammen. Ein Beispiel für ein solches Programm ist die Software PC-Anywhere des Herstellers Symantec. Dabei wird sowohl auf dem zu überwachenden bzw. zu steuernden PC, als auch auf dem zu Wartungszwecken eingesetzten PC eine spezielle Software installiert, die es erlaubt, den entfernt platzierten PC mit Mouse/Tastatureingaben zu bedienen und dessen Bildschirminhalt auf dem eigenen Bildschirm darzustellen. Voraussetzung dafür ist allerdings, dass auf beiden PCs ein kompatibles Betriebssystem installiert und ein Datenkanal mit ausreichender Bandbreite zwischen den beiden Komponenten geschaltet ist.

Die Publikationen "A Model for Presence and Instant Messaging" (Network Working Group RFC 2778, M. Day, J Rosenberg et. al) und EP 1227635 offenbaren ein Verfahren zur Überwachung eines Benutzers in einem paketvermittelnden Netzwerk, wobei der Zustand des Benutzers durch eine Überwachungsinstanz erfasst und zu einer Zielanwendung übermittelt wird, die den Zustand anzeigt und/oder weiterverarbeitet.

Bei den bekannten Verfahren zur Überwachung von Anwendungen hat sich als nachteilig erwiesen, dass die zu überwachenden Anwendungen und Prozesse in vorgegebener Weise konfiguriert sein müssen. Oft muss auf der zur Überwachung angesetzten PC-Hardware zusätzlich eine spezielle, proprietäre Software (beispielsweise "HP OpenView") eingesetzt werden.

Zur ferngesteuerten Administration sind beim SNMP-Verfahrens zusätzlich proprietäre Ergänzungen erforderlich, beispielsweise der Einsatz von Programmen zur Fernsteuerung von PCs (beispielsweise "PC-Anywhere"). Die Überwachung der Anwendungen erfolgt mittels des SNMP-Protokolls in Verbindung mit dem verbindungslosen UDP-Protokoll, wodurch der Verlust einer Ereignismeldung ("Trap") nicht immer erfasst wird.

Der Erfindung liegt daher die Aufgabe zugrunde, Anwendungen und Netzelemente eines Netzwerks auf einfache Weise zu überwachen und zu steuern.

Die Lösung dieser Aufgabe ist durch die im Anspruch 1 angegebenen Merkmale gegeben.

Die Lösung sieht vor, dass die Anwendung durch die Überwachungsinstanz als ein erster Kommunikationspartner in einer Liste von im Netzwerk erreichbaren Kommunikationspartnern registriert wird, und dass die Zielanwendung in der Liste als ein den ersten Kommunikationspartner überwachender zweiter Kommunikationspartner registriert ist. Der Zustand und / oder die Zustandsänderungen der Anwendung wird der Zielanwendung als eine dem ersten Kommunikationspartner zugeordnete Eigenschaft oder als eine vom ersten Kommunikationspartner gesendete Nachricht übermittelt, wobei die Überwachung anhand der Eigenschaft bzw. der Nachricht erfolgt. Dadurch können die ohnehin häufig in den Netzwerken vorhandenen Instant-Messaging-Verfahren zur Überwachung von Anwendungen und Netzelementen genutzt werden. Die Installierung neuer Netzwerkprotokolle und spezieller Anwendungsprogramme zur Überwachung der Anwendungen und Netzelemente erübrigt sich. Dadurch kann das Verfahren auch in weitverzeigten Netzwerken, beispielsweise dem Internet, verwendet werden.

Durch die kennzeichnenden Merkmale der Unteransprüche ist das Verfahren in vorteilhafter Weise weiter ausgestaltet.

Wenn Steuerungsanweisungen zur Steuerung der Anwendung von der Zielanwendung zu der Überwachungsinstanz übermittelt werden, lässt sich von der Zielanwendung aus auch die Administration, also die Steuerung, der Anwendung durchführen.

Die Installation neuer Netzwerkprotokolle und der Einsatz einer eigenen zentralen Netzwerkinstanz wird vermieden, wenn zur Registrierung und zum Auffinden von Überwachungsinstanzen ein Presence/Instant-Messaging-System benutzt wird.

Zustandsmeldungen und Meldungen über Zustandsänderungen werden zuverlässig übermittelt, wenn die Übermittlung des Zustands mit einem Handshake-Verfahren sichergestellt wird.

Ein in vielen Netzwerken bereits vorhandenes und bewährtes Protokoll wird verwendet, wenn die Registrierung der Anwendung und die Übermittlung des Zustands unter Verwendung einer SIP-Infrastruktur und der SIMPLE-Erweiterung des SIP-Protokolls erfolgt.

Wenn eine Anwendung durch eine beliebige Anzahl Zielanwendungen überwachbar ist und Zielanwendungen eine beliebige Anzahl Anwendungen überwachen können, können auch komplexe Netzwerke mit vielen Anwendungen, Netzelementen und Zielanwendungen überwacht und administriert werden.

Manuelle Administrationsvorgänge beim Neustart von Anwendungen und Netzelementen erübrigen sich, indem sich die einer zu überwachenden Anwendung zugeordnete Überwachungsinstanz selbsttätig in der Liste registriert oder nach Anforderung durch die Zielanwendung aufgefunden und registriert wird.

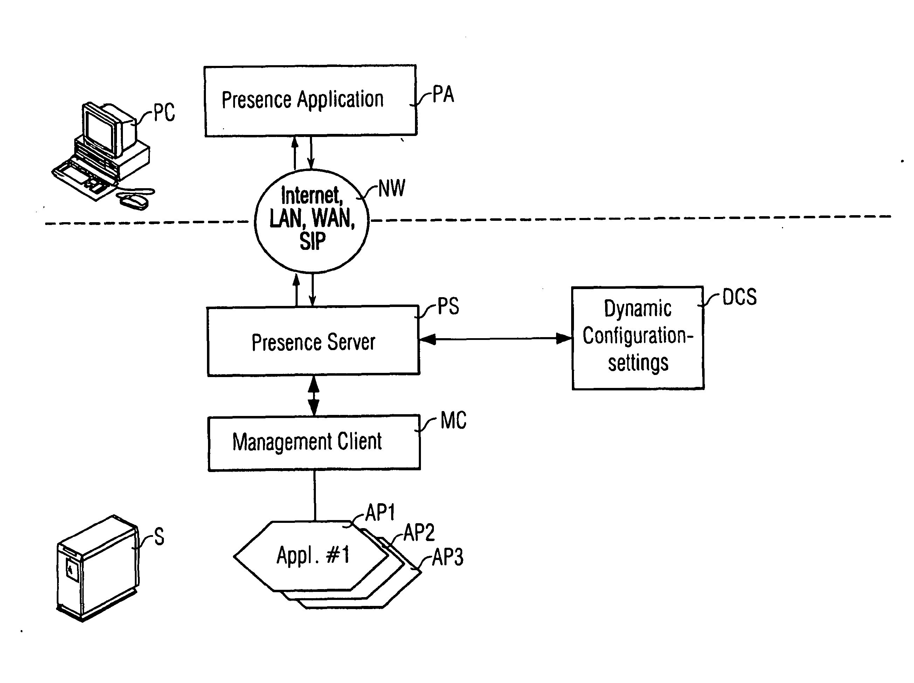

Ein Ausführungsbeispiel des erfindungsgemäßen Verfahrens wird nachfolgend anhand der Zeichnung erläutert.

Die einzige Figur zeigt ein Netzwerk NW, in dem eine Zielanwendung PA (Presence Application), ein zentraler Server PS (Presence Server) mit einer damit verbundenen Konfigurationsdatenbank DCS (Dynamic Configuration Settings), eine Überwachungsinstanz MC (Management Client) und zu überwachende Anwendungen AP1 (Application 1), AP2, AP3 vorhanden sind.

Als Presence Application PA ist eine Messenger-Software auf einem Arbeitsplatzrechner PC installiert, die der Verwaltung, der Anzeige und der Benutzung einer Liste von Teilnehmern in einem Netzwerk NW dient. In diese Liste ("Buddy-List") kann ein Benutzer andere Benutzer des Netzwerkes NW eintragen, die zu seinen potentiellen Kommunikationspartnern gehören und deren jeweiliger Status im Netzwerk NW permanent angezeigt werden soll. Bei diesem Status wird zwischen "Online", "Offline" und "Besetzt" unterschieden, wodurch der Benutzer einen schnellen Überblick darüber erlangt, mit welchem potentiellen Kommunikationspartner zum gegenwärtigen Zeitpunkt eine Kommunikationsverbindung aufgebaut werden kann.

Neben den genannten Zuständen lassen sich auch beliebige andere, entweder vordefinierte oder selbstdefinierte, Zustände anzeigen.

Mit Hilfe eines (Text-)Editors können (Text-)Nachrichten zum Versand an die Kommunikationspartner erstellt werden. In einem Anzeigefenster (nicht gezeigt) werden die Textnachrichten dargestellt, die von den Kommunikationspartnern zum Arbeitsplatzrechner PC dieses Benutzers verschickt werden.

Die Presence Application PA hat über das Netzwerk NW Zugriff auf einen Presence Server PS. Bei dem Presence Server PS handelt es sich um eine zentrale Instanz im Netzwerk NW, wo die Zustandsinformationen der Kommunikationspartner erfasst werden und zu all denen Presence Applications PA weitergeleitet werden, wo der entsprechende Kommunikationspartner in der "Buddy-Liste" geführt wird. Welche Presence Application PA mit den Zustandsinformationen welcher Kommunikationspartner versorgt werden müssen, ist in einer dem Presence Server PS zugeordneten Datenbank DCS gespeichert. Der Presence-Server PS dient auch der Weiterleitung der (Text-)Nachrichten. Selbstverständlich können in einem Netzwerk NW neben einer beliebigen Anzahl von Nutzern (Kommunikationspartnern, Presence Applications, Anwendungen) auch mehrere Presence Server PS angeordnet sein.

Der Presence Server PS kommuniziert mit einem oder mehreren der Management-Clients MC. Dabei kann jeder Management-Client MC auf der gleichen Hardware (Host) wie der Presence Server installiert oder auch in den Presence Server PS integriert sein. Der Management-Client MC dient der Überwachung der Anwendungen AP1, AP2, AP3. Jede Anwendung AP1, AP2, AP3 ist auf dem gleichen Server S installiert wie der Presence Server PS und der Management-Client MC; sie kann aber auch auf einem anderen Netzelement des Netzwerks NW installiert sein oder aber auch ein "Standalone"-Gerät sein, welches z.B. als Router im Netzwerk NW angeordnet ist.

Bei dem Netzwerk NW handelt es sich um ein lokales Datennetz (LAN), welches Daten paketvermittelt nach dem Internetprotokoll (IP-Protokoll) austauscht. Das Netzwerk NW dient auch der Sprachdatenkommunikation (Voice-Over-IP), welche anhand des SIP-Protokolls (Session Initiation Protocol) abgewickelt wird. Das SIP-Protokoll wird im Netzwerk NW mit der SIMPLE-Erweiterung betrieben, welche Protokollelemente zur einfachen, sicheren Kommunikation in Instant-Messaging-Umgebungen bereitstellt.

Als Beispiel für einen Überwachungsvorgang wird im Folgenden die Überwachung des Anwendungsprogramms Winword.Exe als Anwendung AP1 beschrieben. Der Status dieser Anwendung AP1 soll auf dem Arbeitsplatzrechner PC im Rahmen der Presence Application PA laufend angezeigt werden. Zur Überwachung der Anwendung AP1 "Winword.Exe" startet der Benutzer des Arbeitsplatzrechners PC die Presence Application PA und trägt dort als zu suchenden Kommunikationspartner die Anwendung "Winword.Exe" ein. Dabei gibt er als ergänzendes Adresselement die Internetadresse (IP-Adresse) des Servers S ein, auf dem die Anwendung "Winword.Exe" installiert ist. Dieses Vorgehen spiegelt die Adressierung in einem SIP Umfeld wieder. Benutzer werden hier nach dem Muster Name@Host (z.B. winword.exe@129.103.148.155) identifiziert. Anstelle der IP-Adresse kann selbstverständlich auch der "Host-Name" verwendet werden, der dann von einem im Netzwerk NW angeordneten Name-Server (DNS-Server) aufgelöst wird. Die Presence Application PA meldet sich nun über das Netzwerk NW als Benutzer beim Presence Server PS an. Dazu werden neben dem Namen und der Netzwerkadresse der zu überwachenden Anwendung "Winword.Exe" auch Kontrolldaten zwischen Presence Application PA und dem Presence Server PS ausgetauscht, die der zum Anmeldevorgang notwendigen Authentifizierung dienen. Nun trägt der Presence Server PS in seiner Konfigurationsdatenbank DCS den Namen und die Netzwerkadresse der Presence Application PA sowie die Informationen darüber ein, dass die Presence Application PA mit den Zustandsmeldungen und Meldungen über Zustandsänderungen der Anwendung "Winword.Exe" versorgt werden soll.

Der Presence Server PS startet dann eine sich in regelmäßigen Zeitabständen wiederholende Anfrage an den ihm zugeordneten Management-Client MC, ob Zustandsinformationen von einer dem Management-Client MC zugeordneten Anwendung AP1 "Winword.Exe" erfassbar sind und hinterlegt gegebenenfalls in dem Management-Client MC die Anweisung, die Informationen über den derzeitigen Zustand und zukünftige Zustandsänderungen der Anwendung AP1 "Winword.Exe" an den Presence Server PS zu melden. Der Management-Client MC dient hier als "Prozessüberwacher", mit dessen Hilfe auch solche Prozesse (Anwendungen) überwacht und gesteuert werden können, die keine spezielle Überwachungsschnittstelle (z.B. SNMP-Interface) haben.

Jede bei dem Presence Server PS eingehende Zustandsinformation über die Anwendung AP1 wird gemäß den in der Konfigurationsdatenbank DCS hinterlegten Informationen über das Netzwerk NW zur Presence Application PA übertragen und dort visualisiert.

Die in der Presence Application PA geführte Benutzerliste ("Buddy-List") stellt bezogen auf die Anwendungen AP1, AP2, AP3 eine Prozessliste dar, in der der "Online-Status" (Online, Offline, Besetzt) dem Prozess-Status (Aktiv, Closed, Busy) der Anwendung AP1, AP2, AP3 entspricht. Die Instant-Messaging-Funktion (Chat-Funktion) für die "natürlichen" Benutzer der Presence Application PA wird bezogen auf die Anwendungen AP1, AP2, AP3 zu einer "Trace Funktion". Textbasierte Informationen, die vom Management-Client MC zur Presence-Application PA versendet und dort visualisiert werden, dienen der ausführlichen Darstellung des Status' der jeweiligen Anwendungen AP1, AP2, AP3 und können auch zur weiteren Verarbeitung gespeichert oder an weitere Instanzen weitergeleitet werden.

In umgekehrter Richtung verschickte textbasierte Informationen werden von Management-Client MC ausgewertet und in Steuerkommandos für die jeweilige Anwendung AP1, AP2, AP3 umgesetzt.

Die Presence Application PA muß nicht - wie hier beschrieben - eine für die Kommunikation zwischen "natürlichen" Benutzern erstellte Anwendung sein. Alternativ kann es sich bei der Presence Application PA auch um eine spezielle Software zur Überwachung und Steuerung von Anwendungen AP1, AP2, AP3 handeln, die sich der im Netzwerk NW nutzbaren Protokollelemente bedient, hier also des SIP-Protokolls mit der SIMPLE-Erweiterung, um auf den oder die den Anwendungen AP1, AP2, AP3 zugeordneten Management-Client(s) MC zuzugreifen.

## Patentansprüche

1. Verfahren zur Überwachung einer Anwendung (AP1, AP2, AP3) in einem paketvermittelnden Netzwerk (NW),
wobei der Zustand der Anwendung (AP1, AP2, AP3) durch eine Überwachungsinstanz (MC) erfasst und zu einer Zielanwendung (PA) übermittelt wird, die den Zustand anzeigt und / oder weiterverarbeitet, wobei
die Anwendung (AP1, AP2, AP3) durch die Überwachungsinstanz (MC) als ein erster Kommunikationspartner in einer Liste von im Netzwerk erreichbaren Kommunikationspartnern registriert wird,
die Zielanwendung (PA) in der Liste als ein den ersten Kommunikationspartner überwachender zweiter Kommunikationspartner registriert ist und
der Zustand und / oder Zustandsänderungen der Anwendung (AP1, AP2, AP3) der Zielanwendung (PA) als eine dem ersten Kommunikationspartner zugeordnete Eigenschaft oder als eine vom ersten Kommunikationspartner gesendete Nachricht übermittelt wird bzw. werden,
wobei die Überwachung anhand der Eigenschaft oder der Nachricht erfolgt, und
wobei Steuerungsanweisungen zur Steuerung der Anwendung (AP1, AP2, AP3) von der Zielanwendung (PA) zu der Überwachungsinstanz (MC) übermittelt werden.

2. Verfahren nach einem der vorhergehenden Ansprüche, wobei
zur Registrierung und zum Auffinden von Anwendungen (AP1, AP2, AP3) und/oder Überwachungsinstanzen (MC) ein Presence/Instant-Messaging-System benutzt wird.

3. Verfahren nach einem der vorhergehenden Ansprüche,
wobei
die Übermittlung des Zustands mit einem Handshakeverfahren sichergestellt wird.

4. Verfahren nach einem der vorhergehenden Ansprüche, wobei
die Registrierung der Anwendung (AP1, AP2, AP3) und die Übermittlung des Zustands unter Verwendung einer SIP-Infrastruktur und der SIMPLE-Erweiterung des SIP-Protokolls erfolgt.

5. Verfahren nach einem der vorhergehenden Ansprüche, wobei
eine Anwendung (AP1, AP2, AP3) durch eine beliebige Anzahl Zielanwendungen (PA) überwachbar ist und Zielanwendungen (PA) eine beliebige Anzahl Anwendungen (AP1, AP2, AP3) überwachen können.

6. Verfahren nach einem der vorhergehenden Ansprüche, wobei
sich die einer zu überwachenden Anwendung (AP1, AP2, AP3) zugeordnete Überwachungsinstanz (MC) selbsttätig in der Liste registriert oder nach Anforderung durch die Zielanwendung (PA) aufgefunden und registriert wird.

## Claims

1. Method for monitoring an application (AP1, AP2, AP3) in a packet-switching network (NW),
with the state of the application (AP1, AP2, AP3) being recorded by means of a monitoring instant (MC) and being transmitted to a Presence Application (PA) which indicates and/or further processes the state,
wherein the application (AP1, AP2, AP3) is registered by means of the monitoring instant (MC) as a first communication partner in a list of communication partners which can be accessed in the network,
the Presence Application (PA) is registered in the list as a second communication partner which monitors the first communication partner, and
the state and/or state changes of the application (AP1, AP2, AP3) is or are transmitted to the Presence Application (PA) as a characteristic which is associated with the first communication partner, or as a message which is transmitted from the first communication partner,
with the monitoring being carried out on the basis of the characteristic or of the message, and
with control instructions for controlling the application (AP1, AP2, AP3) being transmitted from the Presence Application (PA) to the monitoring instant (MC).

2. Method according to the preceding claim,
wherein
a presence/instant messaging system is used for registration and for finding applications (AP1, AP2, AP3) and/or monitoring instants (MC).

3. Method according to either of the preceding claims, wherein
the transmission of the state is ensured by means of a handshake process.

4. Method according to one of the preceding claims,
wherein
the registration of the application (AP1, AP2, AP3) and the transmission of the state are carried out using an SIP infrastructure and the SIMPLE extension to the SIP protocol.

5. Method according to one of the preceding claims,
wherein
an application (AP1, AP2, AP3) can be monitored by means of any desired number of Presence Applications (PA), and Presence Applications (PA) can monitor any desired number of applications (AP1, AP2, AP3).

6. Method according to one of the preceding claims,
wherein
the monitoring instant (MC) which is associated with an application (AP1, AP2, AP3) to be monitored is automatically registered in the list, or is found and registered on the basis of the request by the Presence Application (PA).

## Revendications

1. Procédé pour surveiller une application (AP1, AP2, AP3) dans un réseau de commutation par paquets (NW),
l'état de l'application (AP1, AP2, AP3) étant enregistré par une instance de surveillance (MC) et étant transmis à une application cible (PA), qui indique et/ou traite ultérieurement l'état,
l'application (AP1, AP2, AP3) étant enregistrée par l'instance de surveillance (MC) en tant qu'un premier partenaire de communication dans une liste de partenaires de communication accessible dans le réseau,
l'application cible (PA) étant enregistrée dans la liste en tant qu'un second partenaire de communication surveillant le premier partenaire de communication et
l'état et/ou des modifications d'état de l'application (AP1, AP2, AP3) de l'application cible (PA) étant transmis en tant qu'une propriété attribuée au premier partenaire de communication ou en tant qu'un message envoyé par le premier partenaire de communication,
la surveillance s'effectuant à l'aide de la propriété ou du message, et
des instructions de commande pour la commande de l'application (AP1, AP2, AP3) étant transmises de l'application cible (PA) à l'instance de surveillance (MC).

2. Procédé selon l'une quelconque des revendications précédentes,
un système de "Presence/Instant-Messaging" étant utilisé pour l'enregistrement et pour la détection d'applications (AP1, AP2, AP3) et/ou d'instances de surveillance (MC).

3. Procédé selon l'une quelconque des revendications précédentes,
la transmission de l'état étant assurée avec une méthode d'établissement de liaison.

4. Procédé selon l'une quelconque des revendications précédentes,
l'enregistrement de l'application (AP1, AP2, AP3) et la transmission de l'état s'effectuant avec l'utilisation d'une infrastructure SIP et de l'extension SIMPLE du protocole SIP.

5. Procédé selon l'une quelconque des revendications précédentes,
une application (AP1, AP2, AP3) pouvant être surveillée par un nombre quelconque d'applications cible (PA) et des applications cible (PA) pouvant surveiller un nombre quelconque d'applications (AP1, AP2, AP3).

6. Procédé selon l'une quelconque des revendications précédentes,
l'instance de surveillance (MC) attribuée à une application (AP1, AP2, AP3) à surveiller s'enregistrant automatiquement dans la liste ou étant détectée et enregistrée sur demande par l'application cible (PA).
